# EUROPEAN PATENT APPLICATION

(11) **EP 4 668 768 A1**
(43) Date of publication of application: **24.12.2025**
(21) Application number: 24755971.9
(22) Date of filing: 30.01.2024
(51) Int. Cl.: H04N 23/62

(54) **VIDEO GENERATION METHOD AND APPARATUS, DEVICE, AND STORAGE MEDIUM**

(30) Priority: 15.02.2023 CN 202310126133
(71) Applicant: Beijing Volcano Engine Technology Co., Ltd., Beijing 100190 (CN)
(72) Inventor: QIN, Shuoshuo, Beijing 100028 (CN); LI, Yijun, Beijing 100028 (CN); HE, Yanglu, Beijing 100028 (CN); WU, Xiaolong, Beijing 100028 (CN); LI, Shixin, Beijing 100028 (CN)
(74) Representative: Grünecker Patent- und Rechtsanwälte PartG mbB
(86) International application number: PCT/CN2024/074726
(87) International publication number: WO 2024/169597

(57) **Abstract**

The present disclosure provides a vide generating method, apparatus, device, and storage medium. The method comprises: obtaining location information carried by a first video in response to a navigation trigger operation on a playback page of the first video, and starting navigation by using the location information as a navigation destination; and obtaining a multimedia material based on an onboard camera during navigation, wherein the multimedia material is used to generate a target video. According to the embodiments of the present disclosure, the function of conveniently obtaining the multimedia material based on the onboard camera during navigation to the location information carried by the video, so that the method of obtaining related materials in the video generation process is enriched, and the video playing experience of the user is improved.

## Description

This application claims priority to Chinese Patent Application No. 202310126133.2, filed on February 15, 2023 and entitled "VIDEO GENERATING METHOD, APPARATUS, DEVICE AND STORAGE MEDIUM", the disclosure of which is incorporated herein by reference in its entirety.

### FIELD

The present disclosure relates to the field of data processing, and in particular, to a video generating method, apparatus and device, and storage medium.

### BACKGROUND

With the continuous development of video processing technology, video-related function requirements of people get increasingly diversified. In the prior art, however, video-related materials are mainly obtained in a single manner, by capturing through a mobile phone or a camera.

Therefore, how to enrich methods for obtaining related materials in the video generating process and thereby improve users' video editing experience is a technical problem to be solved urgently.

### SUMMARY

In order to solve the foregoing technical problems, an embodiment of the present disclosure provides a video generating method.

In a first aspect, the present disclosure provides a video generating method, the method including: obtaining location information carried by a first video in response to a navigation trigger operation on a playback page of the first video, and starting navigation by using the location information as a navigation destination; and obtaining a multimedia material based on an onboard camera during navigation, where the multimedia material is used to generate a target video.

In an optional implementation, before obtaining location information carried by a first video in response to a navigation trigger operation on a playback page of the first video, the method further includes: presenting at least one position identifier on a navigation map interface, where the position identifier has a corresponding relationship with at least one video, and the position identifier is used to identify location information carried by a corresponding video; and determining a video corresponding to a target position identifier as a first video in response to a trigger operation on the target position identifier in the at least one position identifier, and playing the first video.

In an optional implementation, before presenting at least one position identifier on a navigation map interface, the method further includes: obtaining a recommended video list based on current position information, where the recommended video list includes a plurality of videos carrying location information, and the location information has a preconfigured positional relationship with the current position information. Correspondingly, presenting at least one position identifier on a navigation map interface includes: presenting, on the navigation map interface, position identifiers respectively corresponding to location information carried by respective videos in the recommended video list.

In an optional implementation, after starting navigation by using the location information as a navigation destination, the method further includes: obtaining a driving track position record, where the driving track position record is used to generate the target video.

In an optional implementation, after obtaining a multimedia material based on an onboard camera during navigation, the method further includes: uploading the multimedia material and/or the driving track position record to a cloud storage module, where the multimedia material and the driving track position record in the cloud storage module are used to generate a target video on an onboard client and/or a mobile end, and the onboard client and the mobile end are logged in based on the same user account.

In an optional implementation, the method further includes: generating the target video based on the multimedia material and/or the driving track position record, and publishing the target video.

In an optional implementation, the first video carries a driving track position record, and the method further includes: presenting a driving track line corresponding to the driving track position record on the navigation map interface in the process of playing the first video.

In an optional implementation, before obtaining a multimedia material based on an onboard camera during navigation, the method further includes: displaying a capturing confirmation pop-up window on a navigation page, where the capturing confirmation pop-up window is used to confirm whether to start navigation. Correspondingly, obtaining a multimedia material based on an onboard camera during navigation includes: obtaining a multimedia material based on an onboard camera after the capturing is confirmed based on the capturing confirmation pop-up window.

In a second aspect, the present disclosure provides a video generating apparatus, the apparatus applied to a first device, the apparatus including: a first obtaining module, configured to obtain location information carried by a first video in response to a navigation trigger operation on a playback page of the first video, and start navigation by using the location information as a navigation destination; and a second obtaining module, configured to obtain a multimedia material based on an onboard camera during navigation, where the multimedia material is used to generate a target video.

In a third aspect, the present disclosure provides a computer-readable storage medium, storing instructions thereon, where the instructions, when running on a terminal device, cause the terminal device to implement the foregoing method.

In a fourth aspect, the present disclosure provides a video generating device, including: a memory, a processor, and a computer program stored on the memory and runnable on the processor, where the computer program, when executed by the processor, implements the foregoing method.

In a fifth aspect, the present disclosure provides a computer program product, including a computer program/instruction which, when executed by a processor, implements the foregoing method.

The technical solution provided by the embodiments of the present disclosure has at least the following advantages over the prior art:

The embodiments of the present disclosure provide a video generating method. In the method, first, in response to a navigation trigger operation on a playback page of a first video, location information carried by the first video is obtained, and the location information is used as a navigation destination to start navigation. Then, a multimedia material is obtained based on an onboard camera during navigation, where the multimedia material is used to generate a target video. According to the embodiments of the present disclosure, the function of conveniently obtaining the multimedia material based on the onboard camera during navigation to the location information carried by the video, so that the method of obtaining related materials in the video generation process is enriched, and the video playing experience of the user is improved.

### BRIEF DESCRIPTION OF THE DRAWINGS

The accompanying drawings, which are incorporated herein and form a part of this specification, illustrate embodiments consistent with the present disclosure and serve to explain the principles of the disclosure together with the specification.

To illustrate the technical solutions in the embodiments of the present disclosure or in the prior art more clearly, a brief introduction is presented below to the accompanying drawings required for describing the embodiments or the prior art. Apparently, those of ordinary skill in the art may further derive other drawings from these accompanying drawings without creative efforts.
FIG. 1 is a flowchart of a video generating method according to an embodiment of the present disclosure;
FIG. 2 is a schematic diagram of a playback page of a first video according to an embodiment of the present disclosure;
FIG. 3 is a schematic diagram of a playback page of a target video according to an embodiment of the present disclosure;
FIG. 4 is a schematic diagram of a navigation map interface according to an embodiment of the present disclosure;
FIG. 5 is a flowchart of another video generating method according to an embodiment of the present disclosure;
FIG. 6 is a schematic diagram of another navigation map interface according to an embodiment of the present disclosure;
FIG. 7 is a flowchart of another video generating method according to an embodiment of the present disclosure;
FIG. 8 is a schematic structural diagram of a video generating apparatus according to an embodiment of the present disclosure; and
FIG. 9 is a schematic structural diagram of a video generating device according to an embodiment of the present disclosure.

### DETAILED DESCRIPTION

In order to more clearly understand the foregoing objects, features and advantages of the present disclosure, the solutions of the present disclosure will be further described below. It should be noted that the embodiments of the present disclosure and the features of the embodiments can be combined with each other without conflict.

Many specific details are set forth in the following description to provide a thorough understanding of the disclosure. However, the disclosure may further be implemented otherwise than as described herein. Apparently, the embodiments in the specification are only a part rather than all of the embodiments of the present disclosure.

With the continuous development of video processing technology, video-related function requirements of people get increasingly diversified. At present, a video-related material is mainly obtained in a single manner, i.e., by capturing through a mobile phone or a camera.

Therefore, how to enrich methods for obtaining related materials in the video generating process and thereby improve the video playing experience of the user is an urgent technical problem to be solved.

To this end, an embodiment of the present disclosure provides a video generating method. The method includes: in response to a navigation trigger operation on a playback page of a first video, obtaining location information carried by the first video, and starting navigation by using the place information as a navigation destination; in the navigation process, obtaining a multimedia material based on an onboard camera, where the multimedia material is used for generating a target video. It can be seen that the embodiment of the present disclosure can achieve the function of conveniently obtaining a multimedia material based on an onboard camera in the process of navigating to the place information carried in the video. Therefore, the method for obtaining a related material in the video generation process is enriched, and the video playing experience of the user is improved.

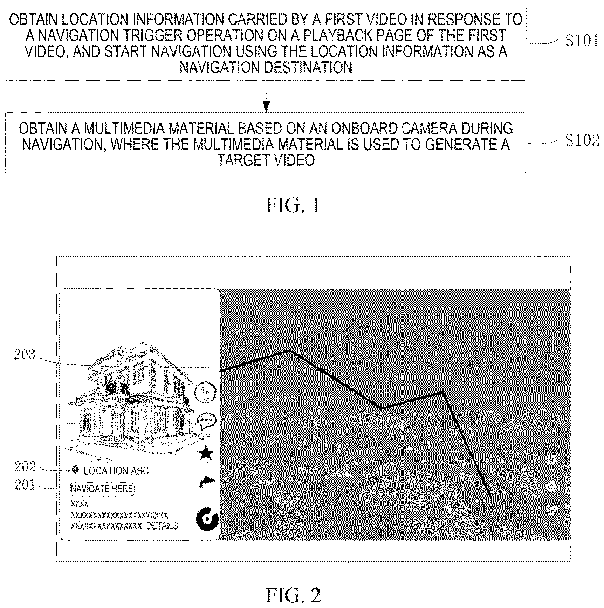

Based thereon, an embodiment of the present disclosure provides a video generating method. Referring to FIG. 2, the figure is a flowchart of a video generating method according to an embodiment of the present disclosure. The method includes:

S101: obtaining, in response to a navigation trigger operation on a playback page of a first video, location information carried in the first video, and starting navigation by using the location information as a navigation destination.

The video generating method provided in the embodiment of the present disclosure may be applied to a client, for example, an onboard client, etc. The onboard client refers to a client deployed on an intelligent vehicle.

In the embodiment of the present disclosure, the first video may be any video that carries location information. Specifically, the first video may be any video that carries location information in any video stream. For example, the first video may be a travel video that carries location information in a recommended video stream.

In some embodiments, the location information carried in the first video may be used to identify geographic location information of a natural scene, a historical building, a public place and the like appearing in the first video.

In some embodiments, the navigation trigger operation on the playback page of the first video may include a trigger operation on a preconfigured navigation control of the playback page of the first video. In some embodiments, the trigger operation may include a click operation, a long-press operation, or the like.

As shown in FIG. 2, the figure is a schematic diagram of a playback page of a first video according to an embodiment of the present disclosure. Upon receiving a trigger operation on a preconfigured navigation control 201, where a current user authorizes to obtain current position information, the current position information and location information carried by the first video are obtained, and the location information carried by the first video is used as a navigation destination. The current position information is used as a navigation departure to start navigation.

In an optional implementation, a video POI (Point of Interest, which generally refers to the point data in an Internet electronic map) may be displayed on the playback page of the first video. Therefore, upon receiving a navigation trigger operation on the play page of the first video, location information carried in the first video may be obtained based on the video POI.

As shown in FIG. 2, the video POI 202 displayed on the playback page of the first video is "Location ABC". Therefore, upon receiving a navigation trigger operation on the playback page of the first video, "Location ABC" is determined as the location information of the first video, and navigation is started using the location information as the navigation destination.

In an optional implementation, after starting navigation by using the location information as the navigation destination, where the current user authorizes to obtain current position information, a driving track position record may further be obtained based on the location information and the current position information, so as to subsequently generate a target video based on the driving track position record.

As shown in FIG. 2, the driving track position record 203 is used to record a travel route from the current position to a position corresponding to the location information.

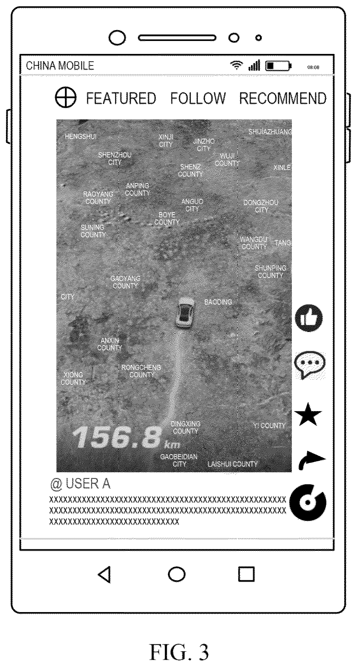

In an optional implementation, after obtaining the driving track position record, the driving track position record may further be sent to a video generating module, and a target video is intelligently generated based on the driving track position record. As shown in FIG. 3, the figure is a schematic diagram of a playback page of a target video according to an embodiment of the present disclosure, where a video being presented on the playback page is a target video generated based on the driving track position record.

S102: obtaining a multimedia material based on an onboard camera during navigation.

In the embodiment of the present disclosure, the multimedia material may include a video material, a picture material, a music material, and the like, which is specifically configured to generate the target video.

In the embodiment of the present disclosure, during navigation, the multimedia material may be obtained based on an onboard camera. Specifically, when the current user authorizes the use of an onboard camera, the onboard camera is invoked to capture one or more consecutive frames of pictures in the driving process. In this way, the picture material or the video material can be obtained, which facilitates the subsequent generation of the target video based on the picture material or the video material.

In one optional implementation, during navigation, the multimedia material may be further obtained based on an onboard microphone. Specifically, when the current user authorizes the use of an onboard microphone, the onboard microphone is invoked to record the driving process, and then the music material in the driving process is obtained.

In another optional implementation, during navigation, the multimedia material may also be obtained based on an automobile data recorder. Specifically, when the current user authorizes the use of an automobile data recorder, a video file stored in the automobile data recorder is intercepted based on the navigation start time and the navigation end time, and then the video material in the navigation process is obtained.

In the practical application, in order to remind the current user to obtain the multimedia material based on the onboard camera, a capturing confirmation pop-up window may be displayed on a navigation page during navigation. After determining to start capturing based on the capturing confirmation pop-up window, the multimedia material is obtained based on the onboard camera.

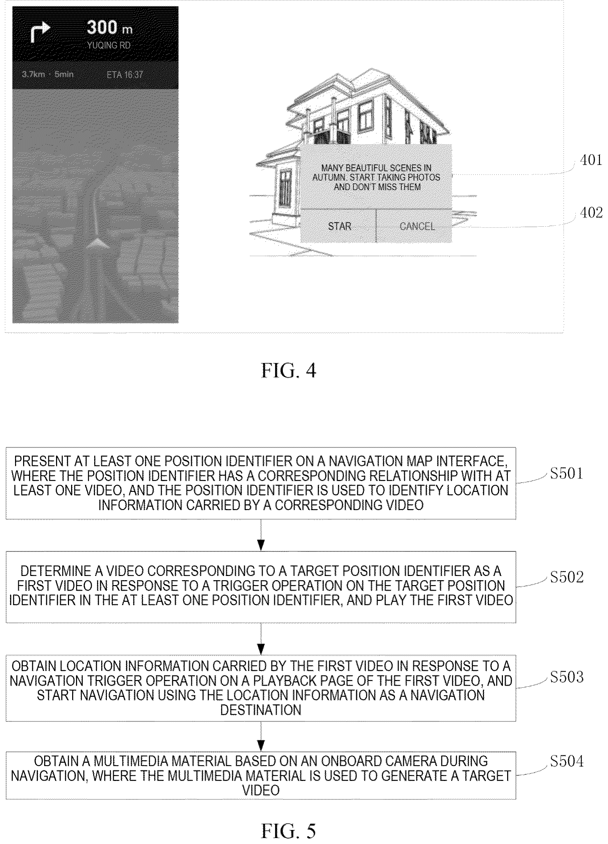

In the embodiment of the present disclosure, the capturing confirmation pop-up window is used to confirm whether capturing is started or not. FIG. 4 is a schematic diagram of a navigation map interface according to an embodiment of the present disclosure. During navigation, a capturing confirmation pop-up window 401 is displayed on the navigation map page. Prompt text "please turn on snapshots, don't miss fine views in autumn outings" is displayed on the capturing confirmation pop-up window 401 to prompt the current user to determine to start capturing based on the capturing confirmation pop-up window.

In the embodiment of the present disclosure, after the capturing is started based on the capturing confirmation pop-up window, the multimedia material is obtained based on an onboard camera where the user authorizes the user of the onboard camera. As shown in FIG. 4, a capturing start control 402 is displayed on the capturing confirmation pop-up window 401. Upon receiving a click operation on the capturing start control 402, the multimedia material is obtained based on the onboard camera.

In an optional implementation, in order to reduce the influence of the pop-up window on the current driving process of the user, the current user may be inquired, in a voice prompt manner during navigation, whether to start capturing with a single click. For example, while navigating to a country park, the current user is asked by voice "Hello, do you want to start the snapshots function". After the current user answers "start" or "yes", the multimedia material in the driving process is obtained based on the onboard camera.

In the video generating method provided by the embodiment of the disclosure, first, in response to a navigation trigger operation on a playback page surface of a first video, location information carried by the first video is obtained, and the location information is used as a navigation destination to start navigation; a multimedia material is obtained based on an onboard camera during navigation, where the multimedia material is used to generate a target video. According to the embodiment of the disclosure, it is possible to fulfill the function of conveniently obtaining the multimedia material based on the onboard camera during navigation to the location information carried in the video, so that the method of obtaining related materials in the video generating process is enriched, and the video playing experience of the user is improved.

In the practical application, after obtaining the multimedia material based on the onboard camera, the multimedia material and/or the driving trajectory position record may be uploaded to a cloud storage module, facilitating the current user to subsequently generate the target video on the onboard client or the mobile end based on the multimedia material and/or the driving track position record stored in the cloud storage module. In some embodiments, the onboard client and the mobile end may log in based on the same user account. Specifically, the mobile end refers to a client deployed on a terminal such as a smart phone, a tablet computer, and a smart watch.

In the embodiment of the present disclosure, after uploading the multimedia material and/or the driving track position record to the cloud storage module, the user may log in the current account at the onboard client to check the stored content in the cloud storage, and may also log in the current account on the mobile end (such as the mobile phone end) to check the stored content in the cloud storage. This facilitates the user to browse and download multimedia materials and/or driving track position records at different terminals.

In the practical application, after the current user obtains the multimedia material and/or the driving track position record, a target video may be further generated based on the multimedia material and/or the driving track position record, and the target video is published.

In an optional implementation, first, the multimedia material and/or the driving track position record are presented based on the cloud storage module. Then, upon receiving a selecting operation of the current user on the multimedia material and/or the driving track position, a target video is automatically generated based on the selected multimedia material and/or the driving track position record, and the target video is published based on a video publishing page.

In another optional implementation, an editing control may further be presented on the video publishing page. Upon receiving a trigger operation on the editing control, the current user may edit the target video again to obtain a target video that better meets the user's needs. Specifically, the editing operation on the target video may be implemented based on the onboard client or the mobile end.

In the embodiment of the disclosure, after obtaining the multimedia material based on the onboard camera, the multimedia material and/or the driving track position record can be uploaded to the cloud storage module, so that the current user can conveniently browse, download and edit the multimedia material and/or the driving track position record at different terminals. In addition, a target video can be automatically generated based on the multimedia material and/or the driving track position record, so that the user can conveniently generate the required video, and the video editing experience of the user is improved.

In the practical application, a position identifier on the navigation map interface may also be combined with the corresponding first video to further improve the video playback experience of the current user. Based thereon, an embodiment of the present disclosure further provides a video generating method. Referring to FIG. 5, the figure is a flowchart of a video generating method according to an embodiment of the present disclosure.

S501: displaying at least one position identifier on a navigation map interface.

In some embodiments, the position identifier has a corresponding relationship with at least one video, and the position identifier is used to identify location information carried by a corresponding video.

In the embodiment of the present disclosure, the position identifier having a corresponding relationship with at least one video means that any position identifier displayed on the navigation map interface corresponds to at least one video.

In the embodiment of the present disclosure, the position identifier is used to identify location information carried by a corresponding video. Therefore, the user may learn the location information carried in the corresponding video based on the position identifier presented on the navigation map interface.

S502: in response to a trigger operation on a target position identifier in the at least one position identifier, determining a video corresponding to the target position identifier as a first video, and playing the first video.

In the embodiment of the present disclosure, the target position identifier may be any one of the at least one position identifier presented on the navigation map interface. The trigger operation on the target position identifier in the at least one position identifier may include a click operation, a long-press operation, and the like which acts on the target position identifier.

In the embodiment of the present disclosure, upon receiving the trigger operation on the target position identifier in the at least one position identifier, a video corresponding to the target position identifier is determined as a first video, and the first video is played on the play page.

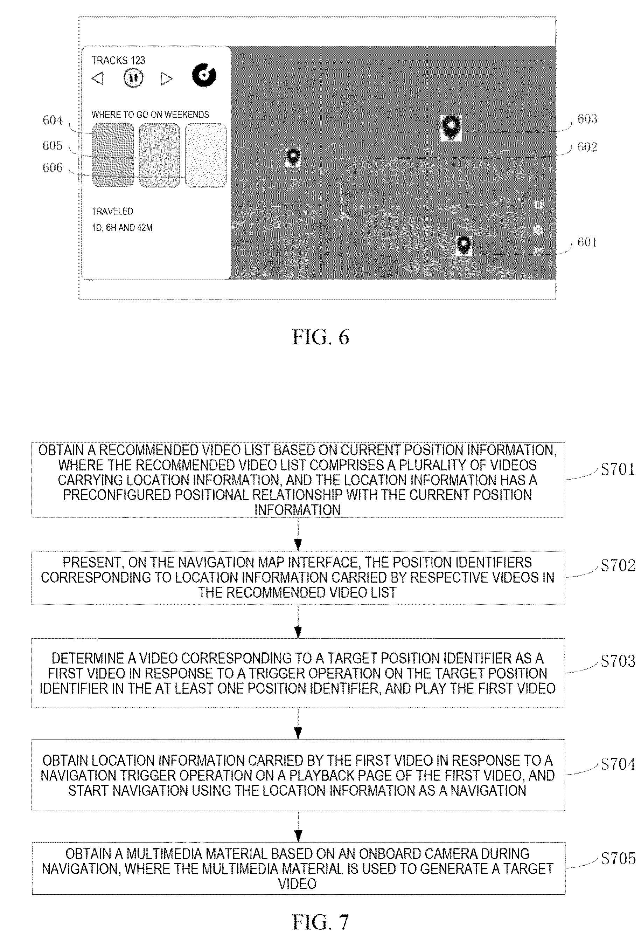

As shown in FIG. 6, the figure is a schematic diagram of another navigation map interface according to an embodiment of the present disclosure. Upon receiving a trigger operation on a target position identifier 601, a video corresponding to the target position identifier 601 is determined as a first video, and the first video is played on the playback page shown in FIG. 2.

In the practical application, upon receiving a trigger operation on any position identifier, the position identifier may be zoomed in, so that the current user can intuitively see the position of the location information carried by the currently played video in the navigation map.

In an optional implementation, upon receiving a trigger operation on any position identifier, the target position identifier may also be highlighted, so that the user can intuitively see the position of the location information carried by the currently played video in the navigation map. As shown in FIG. 6, the position identifier 603 is a display status of a position identifier obtained after zooming in.

In another optional implementation, the first video carries a driving track position record. Therefore, while playing the first video, a driving track line corresponding to the driving track position record may also be presented on the navigation map interface, so that the user can intuitively see the position of the location information carried by the first video in the navigation map.

S503: obtaining, in response to a navigation trigger operation on the playback page of the first video, location information carried in the first video, and starting navigation by using the location information as a navigation destination.

In the embodiment of the present disclosure, the navigation trigger operation on the playback page of the first video may include a trigger operation on the preconfigured navigation control of the playback page of the first video. In some embodiments, the trigger operation may include a click operation, a long-press operation, or the like.

As shown in the video playback page shown in FIG. 2, upon receiving a trigger operation on the preconfigured navigation control 201, in case of authorization by the current user, location information carried in the first video is obtained, the location information is used as a navigation destination, and the position information of the current user is used as the navigation departure to enable navigation.

S504: obtaining a multimedia material based on an onboard camera during navigation.

In some embodiments, the multimedia material is used to generate a target video.

In the video generating method provided by the embodiment of the present disclosure, first, at least one position identifier is presented on a navigation map interface. Upon receiving a trigger operation on a target position identifier in at least one position identifier, a video corresponding to the target position identifier is determined as a first video, and the first video is played. Then, upon receiving a navigation trigger operation on a playback page of the first video, location information carried by the first video is obtained, and the location information is used as a navigation destination to enable navigation. During navigation, a multimedia material is obtained based on an onboard camera. According to the embodiment of the disclosure, the position identifier on the navigation map can be combined with the corresponding video, so that the function of visually displaying the position information carried by the video on the navigation map is realized, and the video playing experience of the user is improved.

Based on the foregoing embodiments, an embodiment of the present disclosure further provides a video generating method. Referring to FIG. 7, the figure is a flowchart of another video generating method according to an embodiment of the present disclosure.

S701: obtaining a recommended video list based on current position information.

In some embodiments, the recommended video list includes a plurality of videos that carry location information, and the location information has a preconfigured positional relationship with the current location information.

In the embodiment of the present disclosure, the preconfigured positional relationship between the location information and the current position information may be that a distance between the location information carried in the video in the recommended video list with the current position information belongs to a preconfigured distance range.

In an optional implementation, where the current user authorizes to obtain the current position information, at least one location information in the preconfigured distance range is obtained taking the current position information as the center. Based on respective location information, videos carrying the location information is searched from a video library to form the recommended video list.

For example, assuming that the current position information is "area A", then location information such as B location and C location within 2 kilometers from "area A" is obtained by taking "area A" as the center, and then videos carrying B location and C location are searched for in the video library to form the recommended video list.

In an optional implementation, after obtaining the recommended video list based on the current position information, the video in the recommended video list may be further presented on the navigation map interface. In order to further improve the video playing experience of the user, the first video may be played upon receiving a trigger operation on the first video in the recommended video list.

In the embodiment of the present disclosure, the first video may be any video in the recommended video list. The trigger operation on the first video in the recommended video list may include a click operation, a long-press operation, and the like on the cover of the first video.

As shown in FIG. 6, a video 604, a video 605, and a video 606 in the recommended video list are presented on the navigation map interface. Upon receiving a trigger operation on the video 604, the video 604 is determined as the first video, and the first video is played on the playback page shown in FIG. 2.

S702: displaying, on the navigation map interface, a position identifier corresponding to the location information carried in each video in the recommended video list.

As shown in FIG. 6, the position identifier 601 is a position identifier corresponding to location information carried in the video 604 in the recommended video list. The position identifier 602 is a position identifier corresponding to location information carried in the video 605, and the position identifier 603 is a position identifier corresponding to location information carried in the video 606.

S703: in response to a trigger operation on a target position identifier in the at least one position identifier, determining a video corresponding to the target position identifier as a first video, and playing the first video.

In the embodiment of the present disclosure, the target position identifier may be any one of the at least one position identifier presented on the navigation map interface. The trigger operation on the target position identifier in the at least one position identifier may include a click operation, a long-press operation and the like on the target position identifier.

As shown in FIG. 6, upon receiving a trigger operation on the position identifier 601, the video 604 corresponding to the position identifier 601 (that is, the target position identifier) is determined as a first video, and the first video (that is, the video 604) is played on the playback page shown in FIG. 2.

S704: obtaining, in response to a navigation trigger operation on a playback page of the first video, location information carried in the first video, and starting navigation by using the location information as a navigation destination.

In the embodiment of the present disclosure, the navigation trigger operation on the playback page of the first video may include a trigger operation on the preconfigured navigation control of the playback page of the first video. In some embodiments, the trigger operation may include a click operation, a long-press operation, or the like.

As shown in the video playback page shown in FIG. 2, upon receiving a trigger operation on the preconfigured navigation control 201, in case of authorization of the current user, the location information carried in the first video is obtained as a navigation destination, and the position information of the current user is used as the navigation departure to start navigation.

S705: obtaining a multimedia material based on an onboard camera during navigation.

In some embodiments, the multimedia material is used to generate a target video.

In the video generating method provided by the embodiment of the present disclosure, first, a recommended video list is obtained based on the current position information. The recommended video list includes a plurality of videos that carry location information. There is a preconfigured positional relationship between the location information and the current position information. Then, a position identifier corresponding to the location information carried in each video in the recommended video list is presented on the navigation map interface. According to the embodiment of the disclosure, position identifiers corresponding to location information carried by respective videos in the recommended video list can be presented based on the recommended video list and the navigation map interface, and the video playing experience of the user is improved.

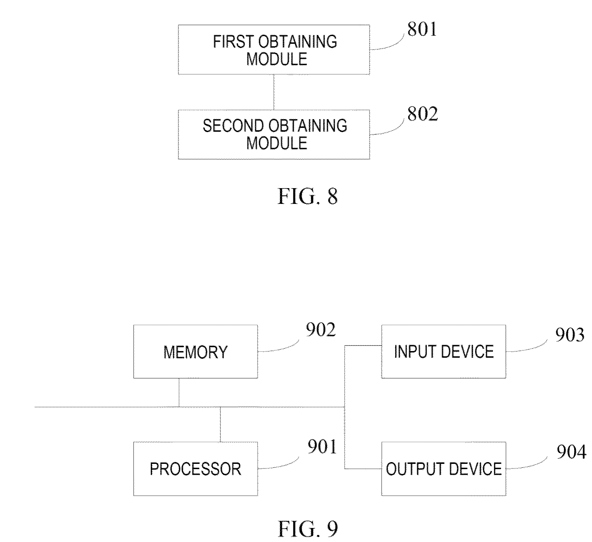

Based on the foregoing method embodiments, the present disclosure further provides a video generating apparatus. Referring to FIG. 8, the figure is a schematic structural diagram of a video generating apparatus according to an embodiment of the present disclosure. The apparatus includes:
a first obtaining module 801, configured to obtain location information carried by a first video in response to a navigation trigger operation on a playback page of the first video, and start navigation by using the location information as a navigation destination; and
a second obtaining module 802, configured to obtain a multimedia material based on an onboard camera during navigation, where the multimedia material is used to generate a target video.

In an optional implementation, the apparatus further includes: a presenting module, configured to present at least one position identifier on a navigation map interface, where the position identifier has a corresponding relationship with at least one video, and the position identifier is used to identify location information carried by a corresponding video; and a determining module, configured to determine a video corresponding to a target position identifier as a first video in response to a trigger operation on the target position identifier in the at least one position identifier, and play the first video.

In an optional implementation, the apparatus further includes: a third obtaining module, configured to obtain a recommended video list based on current position information, where the recommended video list includes a plurality of videos carrying location information, and the location information has a preconfigured positional relationship with the current position information. Correspondingly, the presenting module includes: a presenting submodule, configured to present, on the navigation map interface, position identifiers respectively corresponding to location information carried by respective videos in the recommended video list.

In an optional implementation, the apparatus further includes: a fourth obtaining module, configured to obtain a driving track position record, where the driving track position record is used to generate the target video.

In an optional implementation, the apparatus further includes: an uploading module, configured to upload the multimedia material and/or the driving track position record to a cloud storage module, where the multimedia material and the driving track position record in the cloud storage module are used to generate a target video on an onboard client and/or a mobile end, and the onboard client and the mobile end are logged in based on the same user account.

In an optional implementation, the apparatus further includes: a generating module, configured to generate the target video based on the multimedia material and/or the driving track position record, and publish the target video.

In an optional implementation, the first video carries a driving track position record, and the apparatus further includes: a presenting module, configured to present a driving track line corresponding to the driving track position record on the navigation map interface in the process of playing the first video.

In an optional implementation, the apparatus further includes: a displaying module, configured to display a capturing confirmation pop-up window on a navigation page, where the capturing confirmation pop-up window is used to confirm whether to start navigation. Correspondingly, the second obtaining module includes: an obtaining sub-module, configured to obtain a multimedia material based on an onboard camera after the capturing is confirmed based on the capturing confirmation pop-up window.

In the video generating apparatus provided by the embodiments of the present disclosure, first, in response to a navigation trigger operation on a playback page of a first video, location information carried by the first video is obtained, and the location information is used as a navigation destination to start navigation. Then, a multimedia material is obtained based on an onboard camera during navigation, where the multimedia material is used to generate a target video. According to the embodiments of the present disclosure, the function of conveniently obtaining the multimedia material based on the onboard camera during navigation to the location information carried by the video, so that the method of obtaining related materials in the video generation process is enriched, and the video playing experience of the user is improved.

In addition to the above-described method and apparatus, an embodiment of the present disclosure further provides a computer-readable storage medium. The computer-readable storage medium stores instructions which, when running on a terminal device, cause the terminal device to implement the video generating method of the embodiments of the present disclosure.

An embodiment of the present disclosure further provides a computer program product. The computer program product includes a computer program/instruction which, when executed by a processor, implements the video generating method of the embodiments of the present disclosure.

In addition, an embodiment of the present disclosure further provides a video generating device. Referring to FIG. 9, the video generating device may include: a processor 901, a memory 902, an input unit 903, and an output unit 904. There may be one or more processors 901 in the video generating device. In FIG. 9, one processor is used as an example. In some embodiments of the present disclosure, the processor 901, the memory 902, the input unit 903, and the output unit 904 may be connected via a bus or in another manner, where the connection via a bus is taken as an example in FIG. 9.

The memory 902 may be configured to store a software program and a module, and the processor 901 executes various function applications and data processing of the video processing device by running the software program and the module stored in the memory 902. The memory 902 may mainly include a program storage area and a data storage area, where the program storage area may store an operating system, an application program required by at least one function, etc. In addition, the memory 902 may include a highspeed random access memory, and can further include a non-volatile memory, for example, at least one magnetic disk storage device, a flash memory device, or other volatile solid-state storage device. The input unit 903 may be configured to receive input digital or character information and generate signal inputs related to user settings and function controls of the video processing device.

Specifically, in this embodiment, the processor 901 loads an executable file corresponding to the process of one or more application programs into the memory 902 according to the following instruction, and the processor 901 runs the application programs stored in the memory 902, thereby implementing various functions of the foregoing video processing device.

It should be noted that, as used herein, relational terms such as "first" and "second" are merely used to distinguish one entity or operation from another entity or operation, and do not necessarily require or imply any actual relationship or sequence between these entities or operations. Furthermore, the terms "comprise", "include" or any other variant thereof are intended to cover a non-exclusive inclusion, so that a process, a method, an article, or a device that includes a series of elements not only includes those elements, but also includes other elements that are not explicitly listed, or further includes elements inherent to the process, the method, the article, or the device. An element limited by "including a ..." does not exclude other same elements existing in a process, a method, an article, or a device that includes the element, unless otherwise specified.

The foregoing descriptions are merely specific implementations of the present disclosure, so that those skilled in the art can understand or implement the present disclosure. Various modifications to these embodiments will be readily apparent to those skilled in the art, and the general principles defined herein may be implemented in other embodiments without departing from the spirit or scope of the present disclosure. Therefore, the present disclosure will not be limited to the embodiments described herein but is to be in accord with the widest scope consistent with the principles and novel features disclosed herein.

## Claims

1. A method for video generation, **characterized in that** the method comprising:
obtaining location information carried by a first video in response to a navigation trigger operation on a playback page of the first video, and starting navigation using the location information as a navigation destination; and
obtaining a multimedia material based on an onboard camera during navigation, wherein the multimedia material is used to generate a target video.

2. The method of claim 1, **characterized in that** wherein before obtaining the location information carried by the first video in response to the navigation trigger operation on the playback page of the first video, the method further comprises:
presenting at least one position identifier on a navigation map interface, wherein the position identifier has a corresponding relationship with at least one video, and the position identifier is used to identify the location information carried by a corresponding video; and
determining a video corresponding to a target position identifier as the first video in response to a trigger operation for the target position identifier in the at least one position identifier, and playing the first video.

3. The method of claim 2, **characterized in that** wherein before presenting the at least one position identifier on the navigation map interface, the method further comprises:
obtaining a recommended video list based on current position information, wherein the recommended video list comprises a plurality of videos carrying location information, and there is a preconfigured relationship between the location information and the current position information;
correspondingly, presenting the at least one position identifier on the navigation map interface comprises:
presenting, on the navigation map interface, the position identifiers corresponding to location information carried by respective videos in the recommended video list.

4. The method of claim 1, **characterized in that** wherein after starting the navigation using the location information as the navigation destination, the method further comprises:
obtaining a driving track position record, wherein the driving track position record is used to generate the target video.

5. The method of claim 1 or 4, **characterized in that** wherein after obtaining the multimedia material based on the onboard camera during the navigation, the method further comprises:
uploading the multimedia material and/or the driving track position record to a cloud storage module, wherein the multimedia material and the driving track position record in the cloud storage module are used to generate the target video on an onboard client and/or a mobile end, and the onboard client and the mobile end are logged in based on the same user account.

6. The method of claim 1 or 4, **characterized in that** wherein the method further comprises:
generating the target video based on the multimedia material and/or the driving track position record, and publishing the target video.

7. The method of claim 2, **characterized in that** wherein the first video carries a driving track position record, and the method further comprises:
presenting a driving track line corresponding to the driving track position record on the navigation map interface in the process of playing the first video.

8. The method of claim 1, **characterized in that** wherein before obtaining the multimedia material based on the onboard camera during navigation, the method further comprises:
displaying a capturing confirmation pop-up window on a navigation page, wherein the capturing confirmation pop-up window is used to confirm whether to start the navigation;
correspondingly, obtaining the multimedia material based on the onboard camera during the navigation comprises:
obtaining the multimedia material based on the onboard camera after the capturing is confirmed based on the capturing confirmation pop-up window.

9. An apparatus for video generation, **characterized in that** the apparatus comprising:
a first obtaining module, configured to obtain location information carried by a first video in response to a navigation trigger operation on a playback page of the first video, and start navigation by using the location information as a navigation destination; and
a second obtaining module, configured to obtain a multimedia material based on an onboard camera during navigation, wherein the multimedia material is used to generate a target video.

10. A computer-readable storage medium, **characterized in that** the computer-readable storage medium stores instructions thereon which, when running on a terminal device, cause the terminal device to implement the method of any of claims 1 to 8.

11. A video generating device, **characterized by** comprising: a memory, a processor, and a computer program stored on the memory and runnable on the processor, wherein the computer program, when executed by the processor, implements the method of any of claims 1 to 8.
